# EUROPEAN PATENT SPECIFICATION

(11) **EP 2 994 663 B1**
(45) Date of publication and mention of the grant of the patent: **09.08.2017**
(21) Application number: 13722368.1
(22) Date of filing: 06.05.2013
(51) Int. Cl.: F16F 7/09, D06F 37/20

(54) **MULTI-ACTION ANTI-VIBRATION FRICTIONAL SHOCK ABSORBER**
SCHWINGUNGSDÄMPFENDER REIBUNGSSTOSSDÄMPFER MIT UNTERSCHIEDLICHEN AKTIONEN
ABSORBEUR DE CHOCS PAR FRICTION ANTI-VIBRATION ET MULTI-ACTION

(43) Date of publication of application: 16.03.2016
(73) Proprietor: Arçelik Anonim Sirketi, 34950 Istanbul (TR)
(72) Inventor: VAROL, Isak, 34950 Istanbul (TR); TIRYAKI, Okan, 34950 Istanbul (TR); SANLITURK, Kenan Yuce, 34950 Istanbul (TR); GURBUZER, Gokhan, 34950 Istanbul (TR); GORAY, Eren Onur, 34950 Istanbul (TR); AYDOGDU, Yunus Emre, 34950 Istanbul (TR)
(86) International application number: PCT/EP2013/059401
(87) International publication number: WO 2014/180494

(56) References cited:
- DE-A1- 1 460 969
- DE-B3- 10 334 572
- JP-A- H0 366 935
- JP-A- S5 940 041

## Description

The present invention relates to a shock absorber used in a washing machine, dishwasher, drying machine or a combo washer-dryer, said absorber in the form of a multi-action anti-vibration frictional shock absorber.

The friction absorbers in rotary machines generally consist of a cylindrical shaped body in the form of a shock absorber casing and a shaft in the form of a piston, which is movably disposed inside said cylindrical shaped body. The friction absorbers are hence effective in reducing and dampening vibrations by way of absorbing such vibrations being generated by the rotary action of the drums.

In friction absorbers, one end of the shaft is projected outwards from the position it is embedded at one end of the body and a friction element is compressed between this piston and the inner surface of the body. The friction element interposed between the piston rod and piston body is axially restrained in order to properly operate and generate a frictional force when the piston moves inside the piston body.

The frictional absorbers in household appliances are components which prevent unstable drum movements occurring when the rotary drum starts and stops its first rotating movement or when it changes speed during rotation. They also enable milder directional changes in radial directions while the vibrations are dampened during the operation of the rotary machines.

A prior art publication in the technical field of the present invention may be referred to as DE3216152 A1 among others, the document disclosing an absorber which moves back and forth inside the body as a result of the inclination of the piston sleeves which are fixed on the shaft. A similar frictional shock absorber is known from DE 14 60 969 A1.

The shock absorber of the present invention provides a series of friction members with improved efficiency in terms of dampening function. Therefore a more robust damper application is achieved by way of developing a gradually increasing anti-vibration profile.

The present invention provides an a household appliance comprising an improved multi-action anti-vibration frictional shock absorber, which is defined by the characterizing features as defined in Claim 1.

Primary object of the present invention is hence to provide an improved multi-action anti-vibration frictional shock absorber.

The present invention proposes a household appliance having a shock absorber comprising a first part as a casing and a second part as a piston. The shock absorber further comprises retainer rings interposed between a casing cover and said piston.

An innermost retainer ring enclosing a first friction member as wrapped around the piston is enclosed by a second retainer ring, said latter retainer ring engaging in frictional contact with said innermost retainer ring through a second friction member. A third retainer ring encloses said second retainer ring in a similar manner. Finally, the third retainer ring as the outermost ring is enclosed by a casing cover.

Said casing cover, said first retainer ring and said second retainer comprise each a spring means respectively attached to said casing cover, said first retainer ring and said second retainer on an inner surface portion thereof to be compressible in the axial direction of the piston.

Accompanying drawings are given solely for the purpose of exemplifying a household appliance comprising an improved multi-action anti-vibration frictional shock absorber, whose advantages over prior art were outlined above and will be explained in brief hereinafter.

The drawings are not meant to delimit the scope of protection as identified in the claims nor should they be referred to alone in an effort to interpret the scope identified in said claims without recourse to the technical disclosure in the description of the present invention.

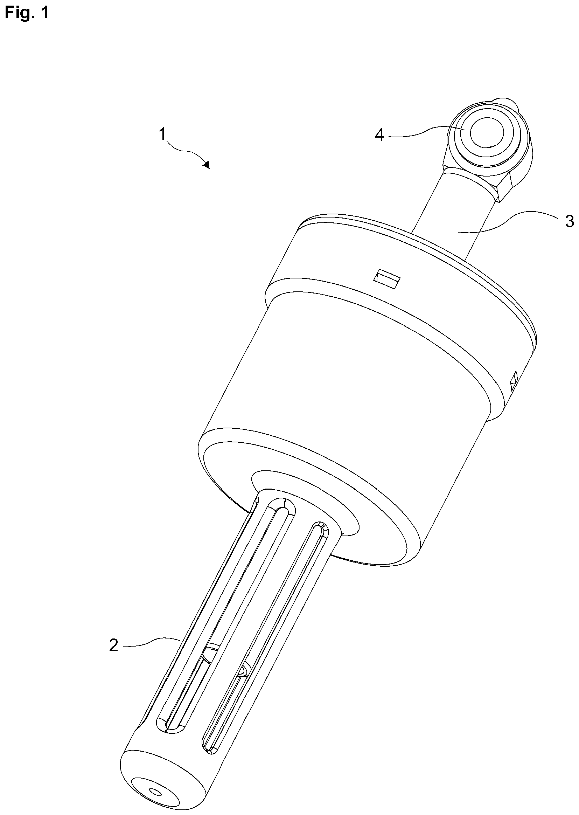

Fig. 1 demonstrates a general perspective view of the shock absorber according to the present invention.

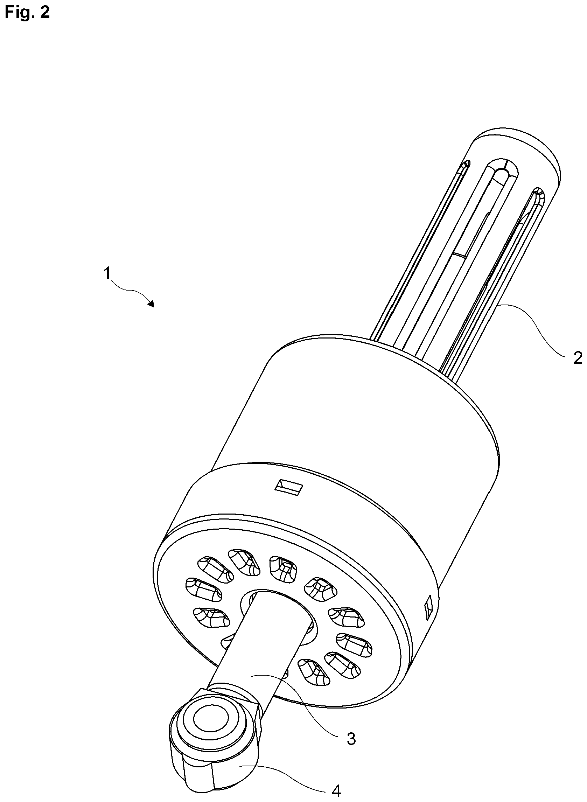

Fig. 2 demonstrates another general perspective view of the shock absorber according to the present invention.

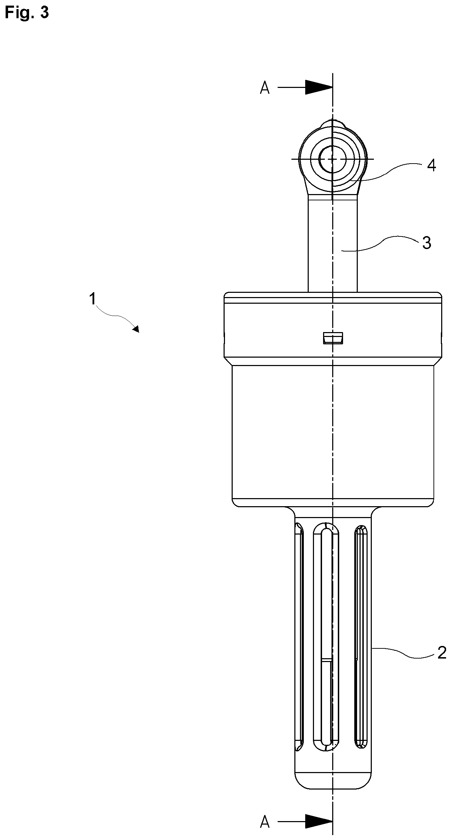

Fig. 3 demonstrates a front view of the shock absorber according to the present invention.

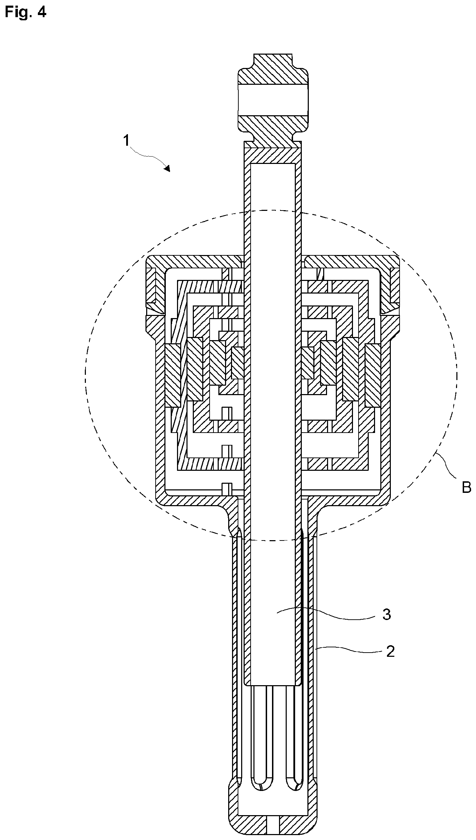

Fig. 4 demonstrates the cross-section A-A as indicated in Fig. 3 according to the present invention.
Fig. 5 demonstrates the enlarged view of the detail B as indicated in Fig. 4 according to the present invention.

The following numerals are used in this detailed description:
1. Shock absorber
2. Tubular casing
3. Piston
4. Connection element
5. First friction member
6. Casing cover
7. First retainer ring
8. Second retainer ring
9. Second friction member
10. Third friction member
11. Fourth friction member
12. Third retainer ring
13. First spring means
14. Second spring means
15. Third spring means

The present invention relates to a household appliance such as a washing machine, dishwasher, drying machine or a combo washer-dryer, that is, a household appliance having a rotary drum. The shock absorber (1) of the present invention may for instance be used in a washing machine comprising a motor conventionally effecting rotation of a drum wherein the laundry to be washed is placed.

A rotary machine's drum is conventionally fixedly attached to the appliance' s frame by means of fastening components such as spring members at the ends of which suspension rings are provided to establish the drum's upper connection to the appliance. The shock absorbers (1) in turn establish the connection between the drum and the appliance's base to be respectively coupled to said drum and the rotary machine's frame via suitable connection elements such as support brackets.

The household appliance of the invention proposes shock absorbers (1) comprised of a first part in the form of a substantially tubular casing (2) having a central longitudinal axis with a free end along which a tappet or a piston (3) as a second part is displaceably guided in the casing (2).

The shock absorber (1) typically operates in the manner that either said drum displaces in upward direction and said shock absorber (1) extends upwards to compensate the drum's displacement or the drum moves towards the machine base and the shock absorber (1) acquires its shortened position such that said piston (3) is at least partially introduced into said casing (2), whereby the drum's lowermost position is achieved. Relative movement of said first and second parts of the shock absorber (1) with regard to the longest or shortest states of the shock absorber (1) is conventionally restricted such that said two portions always remain engaged into each other.

The shock absorber (1) conventionally functions in the manner that a frictional damping effect is produced in between the casing (2) and the piston (3) such that any deflection of the piston (3) crosswise of the central longitudinal axis of the casing (2) is dampened and centered. To that end, the shock absorber (1) also attenuates any radial deflections to center the piston (3) in the casing (2).

The shock absorber (1) of the present invention comprises a first part in the form of a shock absorber tubular casing (2) telescopically receiving a second part, namely a piston (3) longitudinally displaceable into and out of the casing (2). The casing (2) and the piston (3) are conventionally equipped at the ends thereof with connection elements (4) around the central axes of which the earlier two are movable. Relative displacement of the cylindrical piston (3) in a longitudinally movable manner within the casing (2) surrounding the piston (3) is dampened by means of friction members disposed between said first and second parts, i.e. the casing (2) and the piston (3) as explained hereinafter.

According to the present invention, a first friction member (5) is provided in the manner to be pressing against the inner surface of a casing cover (6) extending annularly around said first friction member (5). During the relative oscillatory movement of said first and second parts, friction occurs in between the first friction member (5) and the casing (2), such that the casing cover (6) encapsulates and presses the friction member (5). The first friction member (5) is annularly secured to a first retainer ring (7) entrapped by the casing cover (6). Said first retainer ring (7) having the first friction member (5) has a certain amount of play in the longitudinal direction within the casing cover (6) such that frictional energy is dissipated as heat during displacement. In other words, the first retainer ring (7) is movable in the closed volume defined by said casing cover (6) along the axial direction of the shock absorber (1), while at the same time dissipating frictional energy by means of said first friction member (5).

According to the present invention, the first retainer ring (7) encloses a second retainer ring (8) having a second friction member (9). The second friction member (9) is fixedly attached to said second retainer ring (8) in the same manner as the first friction member (5) is attached to the first retainer ring (7). Likewise, the second friction member (9) dissipates heat energy when the inner surface of the first retainer ring (7) displaces axially in the longitudinal direction of the shock absorber (1). The same logic applies to a third and fourth friction members (respectively 10 and 11) respectively entrapped by the second retainer ring (8) and the third retainer ring (12) with the exception that the fourth friction member (11) is fixedly attached to the third retainer ring (12) and therefore dissipates heat energy in contact with the piston (3) body surface. In other words, when the third retainer ring (12) is no longer able to displace longitudinally in parallel with the piston's (3) axial direction and completes its stroke, the piston (3) can still continue to move in frictional contact with said fourth friction member (11).

The present invention provides a shock absorber (1) involving different frictional forces in each step of the dampening action, that is, the frictional forces being exerted in order for opposing the motion are gradually increased. To this end, according to the present invention, steady state operation of the rotary machine advantageously leads to a limited heat dissipation in the shock absorber (1) as the frictional force between the casing cover (6) and the first friction member (5) is designed as the minimum due to its dimensions compared to frictional forces between other elements involving frictional contact. In the event that a larger force value is required for dampening action, the other components continue the dampening action in the manner that a further dampening stage is initiated as explained below. Every dampening stage adds to the sum of frictional forces and hence a gradually increasing frictional work is done in response to the specific situation.

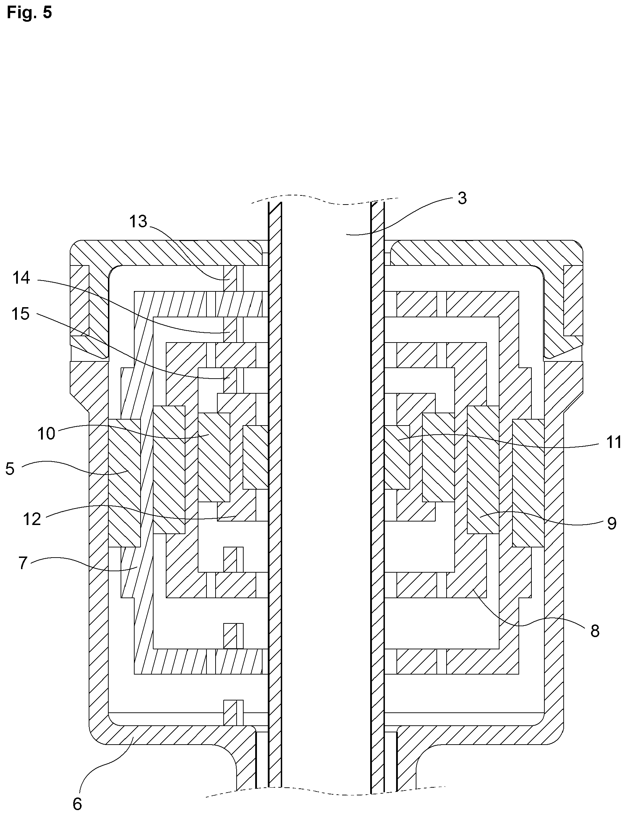

When the piston (2) is moved at the initial stage of the dampening action, the first friction member (5), the first retainer ring (7), the second friction member (9) the second retainer ring (8), the third friction member (10), the third retainer ring (12), the fourth friction member (11) and the piston itself (3) start displacing all together. During this displacement, said first friction member (5) provides dampening during which said first retainer ring (7) advances until it contacts a first spring means (13) being attached to the inner surface of said casing cover (6) in the longitudinal gap in between said first retainer ring (7) and said casing cover (6). The first spring means (13) is preferably a leaf spring compressible in the axial direction of the piston (3) against said first retainer ring (7). Likewise, a second and a third spring means (14, 15) being schematically represented in Fig. 5, provide compression in similar structures.

Said first spring means (13) continues its compression until said first friction member (5) and said first retainer ring (7) stop moving. At this moment, the first stage of dampening is terminated and the subsequent stage begins as other elements, namely the second friction member (9), the second retainer ring (8), the third friction member (10), the third retainer ring (12), the fourth friction member (11), the piston (3) itself with the associated second and third spring means (14, 15) continue displacement. Heat energy is dissipated over the second friction member (9) until the second retainer ring (8) compresses said second spring means (14). When said second friction member (9) and said second retainer ring (8) stop moving, the second phase is terminated and the third friction member (10), the third retainer ring (12), the fourth friction member (11) and the piston (3) continue displacement at this time, while work is done by frictional force on said third friction member (10). The dampening action is then continued in the same manner when the third retainer ring (12) presses against the third spring means (15) upon which third friction member (10), third retainer ring (12) and the fourth friction member (11) stop and only the piston (3) continues moving and work is done on the fourth friction member (11). The sequence of displacements as described above can be repeated in the reverse order as well as is evident to persons skilled in the art.

Contact of said first, second and third retainer rings (7, 8 and 12) respectively with said first, second and third spring means (13, 14, 15) in the axial direction results in deformation of the spring means (13, 14, 15) into a compressed form to fill the longitudinal gaps between the retainer rings (7, 8 and 12).

The material of the friction members (5, 9, 10 and 11) according to the invention can be a non-woven selected from various felt materials as is known to the person skilled in the art.

In a nutshell, the present invention features a shock absorber (1) comprising a substantially tubular first part in the form of a casing (2) telescopically receiving a substantially tubular second part in the form of a piston (3) with interposed retainer rings (7, 8 and 12) such that a first retainer ring (7) encloses a second retainer ring (8) and in turn the second retainer ring (8) encloses a third retainer ring (12). All retainer rings (7, 8 and 12) are enclosed by a casing cover (6). Said casing cover (6), said first retainer ring (7) and said second retainer (8) comprise each a spring means (13, 14, 15) attached therewith in an inner surface portion thereof compressible in the axial direction of the piston (3). The spring means (13, 14, 15) of the invention are either sectional elements in the form of leaf springs or annular elements in the form of O-rings, in both cases having a rubber based material.

Drum rotation with angular acceleration during starting of the motor as well as after the drying process is terminated for instance, is known to require an improved dampening performance. Apart from motor starting and stopping, a more standard dampening action is sufficient to obtain a desired amount of dampening. More precisely, dampening effect should hence be reduced at lower drum speeds or during steady state operation, in order for avoiding transfer of forces to the machine chassis. Therefore a shock absorber behavior specific to the motor's speed avoids stability problems. However, a multi-action damper, i.e. a damper having different dampening phases in response to different motor speeds can cause stability losses as well, due to impulsive effects between phase transitions. To that end, the present invention provides a shock absorber (1) which functions more smoothly by eliminating impulsive effects during phase transitions by a plurality of spring means (13, 14, 15).

## Claims

1. A shock absorber (1) comprising a substantially tubular first part in the form of a casing (2) telescopically receiving a substantially tubular second part in the form of a piston (3), said shock absorber (1) further comprising retainer rings (7, 8 and 12) interposed between a casing cover (6) of said casing (2) and said piston (3) such that a first retainer ring (7) encloses a second retainer ring (8) and said second retainer ring (8) encloses a third retainer ring (12), **characterized in that**
said first retainer ring (7), said second retainer ring (8) and said third retainer ring (12) respectively comprise a first friction member (5), a second friction member (9) and a third friction member (10) fixedly attached around the retainer rings (7, 8, 12) in an annularly extending manner, the third retainer ring (12) comprises a fourth friction member (11) fixedly attached within the third retainer ring (12) around the piston (3) in an annularly extending manner, the casing cover (6), the first retainer ring (7) and the second retainer ring (8) comprise each a spring means (13,14, 15) respectively attached to the casing cover (6), the first retainer ring (7) and the second retainer ring (8) on an inner surface portion thereof to be compressible in the axial direction of the piston (3), wherein said first friction member (5) provides dampening when said first retainer ring (7) advances until it contacts a first spring means (13) being attached to the inner surface of said casing cover (6) in a longitudinal gap in between said first retainer ring (7) and said casing cover (6).

2. A shock absorber (1) as in Claim 1, **characterized in that** amount of frictional force generated between the casing cover (6) and the first retainer ring (7) on the first friction member (5) is less than that generated on said second friction member (9), third friction member (10) and fourth friction member (11).

3. A shock absorber (1) as in Claim 1 or 2, **characterized in that** dampening action is performed in gradual phases whereby a further phase of dampening action starts only after an earlier phase is terminated.

4. A shock absorber (1) as in Claim 1 or 2, **characterized in that** said spring means (13, 14, 15) are in the form of sectional leaf springs or annularly extending spring elements.

5. A household appliance, **characterized in that** said household appliance comprises the shock absorber (1) as in Claim 1.

6. A household appliance as in Claim 5, **characterized in that** said household appliance is a washing machine, dishwasher, drying machine or a combo washer-dryer.

## Patentansprüche

1. Ein Stoßdämpfer (1) bestehend aus einer praktisch röhrenförmigen Erstteil in der Form eines Gehäuses (2) teleskopisch erhaltend eine praktisch röhrenförmige Zweitteil in der Form eines Kolbens (3), besagter Stoßdämpfer (1) ferner bestehend aus Sprengringe (7, 8 und 12) eingebettet zwischen einer Gehäuseabdeckung (6) des besagten Gehäuses (2) und besagten Kolbens (3), sodaß ein erster Sprengring (7) einen zweiten Sprengring (8) einschließt und besagter zweiter Sprengring (8) einen dritten Sprengring (12) einschließt, **dadurch gekennzeichnet, daß**
besagter erster Sprengring (7), besagter zweiter Sprengring (8) und besagter dritter Sprengring (12) jeweilig aus einem ersten Reibungselement (5), einem zweiten Reibungselement (9) und einem dritten Reibungselement (10) bestehen, die starr um Sprengringe (7, 8, 12) in einer ringförmigen Streckungsweise befestigt sind, dritter Sprengring (12) besteht aus einem vierten Reibungselement (11), die starr im dritten Sprengring (12) um den Kolben (3) in einer ringförmigen Streckungsweise befestigt sind, Gehäuseabdeckung (6), erster Sprengring (7) und zweiter Sprengring (8) bestehen aus je einem Federmittel (13, 14, 15), die jeweilig zur Gehäuseabdeckung (6) befestigt sind, erster Sprengring (7) und zweiter Sprengring (8) auf einem inneren Flächenteil sind in axialer Richtung des Kolbens (3) zusammendrückbar, wo besagtes erstes Reibungselement (5) Dämpfung sicherstellt, wenn besagter erster Sprengring (7) fortschreitet, bis er mit einem ersten Federmittel (13) in Berührung kommt, der zur inneren Fläche der besagten Gehäuseabdeckung (6) in einer longitudinalen Spalte zwischen dem besagten ersten Reibungselement (7) und der besagten Gehäuseabdeckung (6) befestigt ist.

2. Ein Stoßdämpfer (1) in Anspruch 1, **dadurch gekennzeichnet, daß** der Betrag der Reibungskraft, die zwischen Gehäuseabdeckung (6) und erster Sprengring (7) auf dem ersten Reibungselement (5) erzeugt ist, kleiner als der Kraft auf dem besagten zweiten Reibungselement (9), dritten Reibungselement (10) und vierten Reibungselement (11) ist.

3. Ein Stoßdämpfer (1) in Anspruch 1 oder 2, **dadurch gekennzeichnet, daß** Dämpfungsaktion in allmählichen Phasen durchgeführt wird, wobei eine weitere Dämpfungsphase nur nach Beendung einer frühen Phase beginnt.

4. Ein Stoßdämpfer (1) in Anspruch 1 oder 2, **dadurch gekennzeichnet, daß** besagte Federmittel (13, 14, 15) in der Form von eingeteilten Blattfedern oder ringförmig gestreckten Federelemente sind.

5. Ein Haushaltgerät, **dadurch gekennzeichnet, daß** besagtes Haushaltgerät aus Stoßdämpfer (1) wie in Forderung 1 besteht.

6. Ein Haushaltgerät in Anspruch 5, **dadurch gekennzeichnet, daß** besagtes Haushaltgerät eine Waschmaschine, Geschirrspülmaschine, Trockner oder ein Combo Waschtrockner ist.

## Revendications

1. Un amortisseur (1) comprenant une première partie sensiblement tubulaire sous la forme d'un boîtier (2) recevant de manière télescopique une deuxième partie sensiblement tubulaire sous la forme d'un piston (3), ledit amortisseur (1) comprenant en outre des bagues de retenue (7 , 8 et 12) interposés entre un couvercle de boîtier (6) dudit boîtier (2) et ledit piston (3) de sorte qu'un première bague de retenue (7) enferme une seconde bague de retenue (8) et ladite deuxième bague de retenue (8) renferme une troisième bague de retenue (12),
**caractérisé en ce que**
ladite première bague de retenue (7), ladite deuxième bague de retenue (8) et ladite troisième bague de retenue (12) comprennent respectivement un premier élément de friction (5), un deuxième élément de friction (9) et un troisième élément de friction (10) attaché de manière fixe autour de la bague de retenue (7, 8, 12) s'etendant de manière annulaire, la troisième bague de retenue (12) comprend un quatrième élément de friction (11) attaché de manière fixe dans la troisième bague de retenue (12) autour du piston (3) s'étandant manière annulaire, le couvercle de boîtier (6), la première bague de retenue (7) et la deuxième bague de retenue (8) comprennent chacun un moyen de ressort (13, 14, 15) attaché respectivement au couvercle de boîtier (6), la première bague de retenue (7) et la deuxième bague de retenue (8) sur une partie de surface interne de celle-ci pour être compressibles dans la direction axiale du piston (3), dans lequel ledit premier élément de friction (5) fournit un amorçage lorsque ladite première bague de retenue (7) avance jusqu'à ce qu'elle entre en contact avec un premier moyen de ressort (13) étant attaché à la surface intérieure dudit couvercle de boîtier (6) dans un espace longitudinal entre ladite première bague de retenue (7) et ledit couvercle de boîtier (6).

2. Un amortisseur (1) selon la revendication 1, **caractérisé en ce que** la quantité de force de frottement générée entre le couvercle de boîtier (6) et la première bague de retenue (7) sur le premier élément de friction (5) est inférieure à celle générée sur ledit deuxième élément de friction (9), troisième élément de friction (10) et quatrième élément de friction (11).

3. Un amortisseur (1) selon la revendication 1 ou 2, **caractérisé en ce que** l'action de l'amorçage est effectuée en phases graduelles, de sorte qu'une autre phase de l'action de l'amorçage commence seulement après une phase antérieure est terminée.

4. Un amortisseur (1) selon la revendication 1 ou 2, **caractérisé en ce que** lesdits moyens de ressorts (13, 14, 15) se présentent sous la forme de ressorts à lames en coupe ou d'éléments à ressort s'étendant annulaire ment.

5. Un appareil ménager, **caractérisé en ce que** ledit appareil ménager comprend l'amortisseur (1) selon la revendication 1.

6. Un appareil ménager selon la revendication 5, **caractérisé en ce que** ledit appareil ménager est un lave-linge, un lave-vaisselle, un sèche-linge ou une laveuse-sécheuse combo.
